# EUROPÄISCHE PATENTSCHRIFT

(11) **EP 0 518 861 B1**
(45) Veröffentlichungstag und Bekanntmachung des Hinweises auf die Patenterteilung: **14.09.1994**
(21) Anmeldenummer: 90915772.9
(22) Anmeldetag: 03.11.1990
(51) Int. Cl.: C07F 9/146

(54) **VERFAHREN ZUR GEWINNUNG VON PHOSPHORIGSÄURE-BIS-(2,4-DI-TERT.-BUTYL-PHENYL)-ESTER-HALOGENIDEN**
PROCESS FOR OBTAINING PHOSPHOROUS ACID-BIS-(2,4-DI-TERT.-BUTYL-PHENYL) ESTER HALIDES
PROCEDE DE PREPARATION D'ESTER-HALOIDES D'ACIDE PHOSPHOREUX BIS-(2,4-DI-TERT.-BUTYLE-PHENYLE)

(30) Priorität: 11.11.1989 DE 3937610
(43) Veröffentlichungstag der Anmeldung: 23.12.1992
(73) Patentinhaber: HOECHST AKTIENGESELLSCHAFT, 65926 Frankfurt am Main (DE)
(72) Erfinder: BÖHSHAR, Manfred, D-6233 Kelkheim (DE); KLEINER, Hans-Jerg, D-6242 Kronberg (DE)
(86) Internationale Anmeldenummer: EP9001843
(87) Internationale Veröffentlichungsnummer: WO9107415

(56) Entgegenhaltungen:
- EP-A- 0 158 300
- DE-C- 2 636 270
- DE-C- 2 643 442
- DE-C- 2 643 474
- US-A- 4 739 000

## Beschreibung

Phosphorigsäure-bis-(2,4-di-tert.-butyl-phenyl)-ester-halogenide sind wertvolle Ausgangsverbindungen zur Herstellung von technisch interessanten Phosphiten (US-PS 4,739,000) oder Phosphoniten (deutsche Patentanmeldungen P 38 43 016.9 und P 39 16 502.7), die als Stabilisatoren für synthetische Polymere Anwendung finden.

Es ist aus der US-PS 4,739,000 bekannt, daß Phosphorigsäure-bis-(2,4-di-tert.-butyl-phenyl)-ester-chlorid durch die Umsetzung von Phosphortrichlorid mit doppelt molaren Mengen 2,4-Di-tert.-butyl-phenol und Triäthylamin zur Neutralisation der freiwerdenden Salzsäure hergestellt werden kann. Dabei ist naturgemäß die Verwendung erheblicher Mengen eines geeigneten, aprotischen Lösungsmittels wie Toluol unumgänglich. Das Endprodukt hat den dortigen Angaben zufolge eine Reinheit von 85 %.

Für eine beabsichtigte technische Produktion ist ein solches Vorgehen vor allem deshalb ungünstig, weil nicht nur beträchtliche Mengen an Lösungsmittel wieder aufgearbeitet werden müssen, sondern das gebildete Triäthylammoniumchlorid auch mit einer Alkalilauge neutralisiert werden muß, um die als Hilfsmittel verwendete Base wiederzugewinnen. Ein Zwangsanfall von 2 Äquivalenten Salz ist dabei nicht zu vermeiden.

Die Herstellung von Phosphorigsäure-diarylester-halogeniden durch direkte Umsetzung von Phenolen bzw. Naphtholen und Phosphortrihalogeniden im Molverhältnis 2 : 1 ist wegen nicht zu kontrollierender Disproportionierungsreaktionen und Folgereaktionen unbefriedigend (Houben-Weyl, "Methoden der Organischen Chemie", E1, S. 373, 1982, s. auch Zh. Obsch. Khim. 37, 464 - 468, 1967).

Aufgabe der vorliegenden Erfindung war es daher, in einfacher Weise Phosphorigsäure-bis-(2,4-di-tert.-butyl-phenyl)-ester-halogenide zu gewinnen.

Zur Lösung dieser Aufgabe schlägt die Erfindung ein Verfahren zur Gewinnung von Phosphorigsäure-bis-(2,4-di-tert.-butyl-phenyl)-ester-halogeniden der Formel 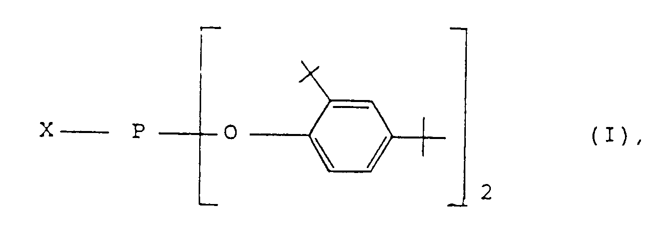
in der X ein Halogen mit einem Atomgewicht von mindestens 35 ist, dadurch gekennzeichnet, daß man ein Phosphorigsäure-2,4-di-tert.-butyl-phenyl-ester-dihalogenid der Formel (II) 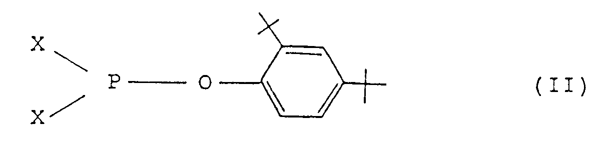
in Gegenwart eines Katalysators auf 130 bis 280°C erhitzt, das so durch Disproportionierung entstehende Phosphortrihalogenid aus dem Reaktionsgemisch entfernt und man als Katalysator mindestens einen Vertreter aus der Gruppe
a) Verbindungen der Formeln (III), (IV), (V) oder (VI) 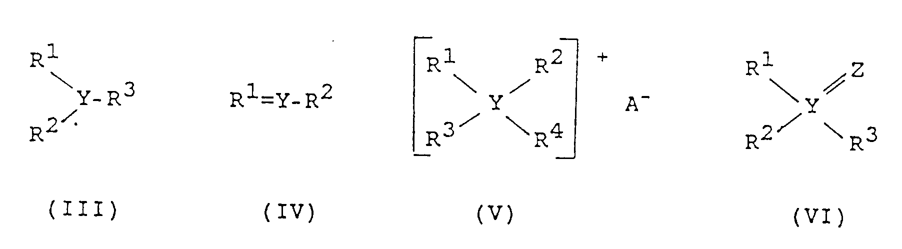 worin Y ein Element der fünften Hauptgruppe des periodischen Systems nach Meyer-Mendelejeff mit einer Ordnungszahl von 7 bis 15, A einen anorganischen oder organischen Säurerest, R¹, R², R³ und R⁴ gleiche oder verschiedene organische Reste mit bis zu 20 C-Atomen bedeuten, wobei zwei der Reste R¹ bis R⁴ oder im Falle der allgemeinen Formel (VI) zwei oder drei der Reste R¹ bis R³ sich zu einem cyclischen System schließen können, gegebenenfalls unter Einbeziehung eines Heteroatoms wie Sauerstoff, Stickstoff oder Schwefel, und Z Sauerstoff oder - falls Y Phosphor ist - auch Schwefel, zwei Halogenatome oder die Gruppe NR⁵ bedeutet, wobei R⁵ = R¹ oder Wasserstoff ist,
b) Säureamide und/oder
c) Verbindungen aus der Gruppe ein- bis dreibasige, organische oder anorganische vollamidierte Säuren des drei- oder fünfwertigen Phosphors, deren N-Atome durch aliphatische Reste mit bis zu 20 C-Atomen alkyliert sein und deren organische Reste bis zu 20 C-Atome enthalten können, einsetzt.

Nach einer besonders bevorzugten Ausführungsform geht man so vor, daß man durch Zugabe von einer geringeren als der stöchiometrischen Menge an 2,4-Di-tert.-butyl-phenol zusätzliches Phosphorigsäure-bis-(2,4-di-tert.-butyl-phenyl)-ester-halogenid erzeugt.

Das erfindungsgemäße Verfahren ist nicht mit den Nachteilen behaftet, die mit dem bekannten Verfahren verbunden sind.

Die Reaktion, die man an sich in jeder erdenklichen Weise durchführen kann, wird bevorzugt ohne Verwendung eines Lösungsmittels durchgeführt, wenngleich auch mit einem Lösungsmittel, das als azeotropes Schleppmittel verwendet wird, gearbeitet werden kann. Vorteilhaft setzt man das Phosphorigsäure-monoester-dihalogenid (II) mit bis zu 0,9, bevorzugt 0,3 bis 0,6 Äquivalenten 2,4-Di-tert.-butyl-phenol um und erhitzt in Gegenwart des Katalysators auf 130 - 280°C. Dabei ist es besonders vorteilhaft, nach Beendigung der Halogenwasserstoffentwicklung noch eine ausreichend lange Nachreaktion im obengenannten Temperaturbereich vorzunehmen, wobei durch Disproportionierungsvorgänge der Gehalt von (II) zugunsten des Produktes (I) reduziert wird, ohne daß in nennenswertem Umfang unerwünschte Nebenprodukte entstehen. Zur Isolierung des gewünschten Produkts (I) wird restliches Ausgangsmaterial (II) anschließend unter vermindertem Druck abdestilliert. Dabei wird der Katalysator gewöhnlich mit ausgetragen.

Bevorzugt arbeitet man bei Temperaturen von 160 bis 230°C. Die Reaktion ist im allgemeinen, je nach der angewandten Temperatur, nach 2 bis 10 Stunden beendet. Meistens führt man die Reaktion innerhalb von 2 bis 5 Stunden durch.

Gewöhnlich wird die Umsetzung unter Normaldruck durchgeführt; es kann jedoch zuweilen von Vorteil sein, die Entfernung des Chlorwasserstoffs durch Anwendung von Unterdruck zu begünstigen.

Da die Reaktionsteilnehmer hydrolyseempfindlich sind, wird vorteilhaft unter Feuchtigkeitsausschluß gearbeitet. Es kann zweckmäßig sein, die Reaktion unter Durchleiten von Inertgas wie Stickstoff oder Argon durchzuführen oder unter einer Schutzgasatmosphäre dieser Gase.

Der Katalysator wird gewöhnlich in geringen Mengen, z. B. 0,0001 bis 0,1 Mol, vorzugsweise 0,001 bis 0,02 Mol pro Mol (II), eingesetzt.

Wie bereits erwähnt handelt es sich bei den erfindungsgemäß eingesetzten Katalysatoren um
a) Verbindungen der Formeln (III), (IV), (V) oder (VI) 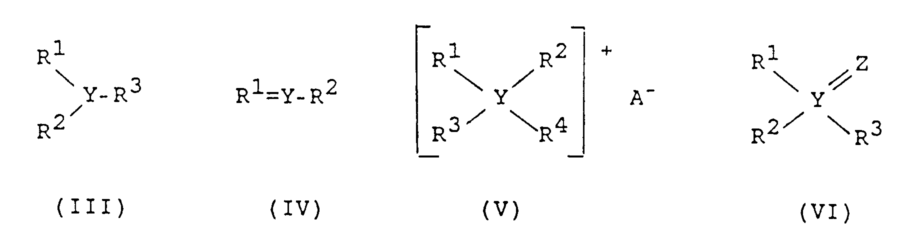 worin Y ein Element der fünften Hauptgruppe des periodischen Systems nach Meyer-Mendelejeff mit einer Ordnungszahl von 7 bis 15 (also Stickstoff oder Phosphor), A einen anorganischen oder organischen Säurerest, vorzugsweise ein Halogenid, Sulfat oder Sulfonat, R¹, R², R³ und R⁴ gleiche oder verschiedene organische Reste, vorzugsweise (cyclo)aliphatischen oder aromatischen Charakters, mit bis zu 20 C-Atomen, vorzugsweise 1 bis 10 C-Atomen bedeuten, wobei zwei der Reste R¹ bis R⁴ oder im Falle der allgemeinen Formel (VI) zwei oder drei der Reste R¹ bis R³ sich zu einem cyclischen, gegebenenfalls substituierten System schließen können, gegebenenfalls unter Einbeziehung eines Heteroatoms wie Sauerstoff, Stickstoff oder Schwefel, und Z Sauerstoff oder - falls Y Phosphor ist - auch Schwefel, zwei Halogenatome oder die Gruppe NR⁵ bedeutet, wobei R⁵ = R¹ oder Wasserstoff ist,
b) Säureamide und/oder
c) Verbindungen aus der Gruppe ein- bis dreibasige, organische oder anorganische vollamidierte Säuren des drei- oder fünfwertigen Phosphors, deren N-Atome durch aliphatische Reste mit bis zu 20 C-Atomen, vorzugsweise 1 bis 10 C-Atomen, alkyliert sein und deren organische Reste bis zu 20 C-Atome, vorzugsweise 1 bis 10 C-Atome, enthalten können.

Beispiele für geeignete Katalysatoren sind:
A. Tertiäre aliphatische und aromatische Amine und Phosphine wie Trimethyl-, Triäthyl-, Tripropyl-, Triisopropyl-, Tributyl-, Tri-n-hexyl-, Tris-(2-äthyl-hexyl)- und Triphenylamin, Trimethyl, Triäthyl-, Tripropyl-, Tributyl-, Triphenyl- und Tris-(p-dimethylaminophenyl)-phosphin und die entsprechenden gemischten Amine, Phosphine, Phospholane und Phospholene wie Dimethyläthylamin, Diäthylbutylamin, N-Dimethylanilin, 4-Methyl-N-dimethylanilin, N-Diäthylanilin, Bis-(1,8-dimethylamino)-naphthalin, N,N'-Tetramethylphenylendiamin oder N-Methylpyrrolidin; Methyldiäthylphosphin, Dimethylpropylphosphin, Diäthylbenzylphosphin, 1-Methyl-phospholen-3 und 1-Äthyl-3-methyl-phospholen-3;
B. Azomethine wie Hydrobenzamid, Benzylidenanilin, o-, m- und p-Methyl-, o-, m- und p-Methoxy-, o-, m- und p-Chlorbenzylidenanilin sowie entsprechende Derivate substituierter Aniline wie des o-, m- und p-Toluidins, des o-, m- und p-Nitranilins, des o-, m- und p-Anisidins sowie des o-, m- und p-Chloranilins;
C. Quartäre Ammoniumsalze bzw. Phosphoniumsalze wie Tetramethylammoniumchlorid oder -bromid, Tetraäthylphosphoniumchlorid, Trimethyl- oder Triäthylbenzylammoniumchlorid oder -bromid, Trimethylbenzylphosphoniumchlorid, Triphenyläthylphosphonium-2,4-diaminobenzolsulfonat;
D. Heterocyclische Verbindungen mit aromatischem Charakter wie Pyridin, Chinolin, ihre verschiedenen Alkyl- und Dialkyl-, vorzugsweise Methyl- bzw. Dimethyl-derivate, Dimethylaminopyridine, Imidazol, N-Vinyl-imidazol, Benzthiazol, 2-Amino-6-äthoxy-benzthiazol, ferner Phosphabenzole;
E. Säureamide wie Dimethylformamid, Diäthylformamid, N-Dimethylacetamid, N-Diäthylpropionamid, N-Dimethylbenzamid, N-Methyl-pyrrolidon, N,N'-Tetramethyl-terephthalsäurediamid oder Harnstoffe wie Tetramethylharnstoff und Trimethylphenylharnstoff;
F. Sonstige Stickstoff- und/oder Phosphorverbindungen mit einer höheren Wertigkeit eines N- oder P-Atoms als 3 wie Pyridin-N-oxyd, Trimethyl-, Tributyl-, Trihexyl-, Triphenyl-, Dimethylphenylphosphinoxid und Dimethylchlormethyl-, Dimethyleikosyl-, Dimethyldodecyl-, Dimethyl- und Dimethylpyrrolidinyl-1-methyl-phosphinoxid, Triphenylphosphin-dichlorid, Dimethylphenylphosphinsulfid, Dimethyldodecylphosphinsulfid, Triphenylphosphinimin, Dimethylchlormethylphosphindichlorid, N-2-Dimethylphosphinyl-äthyl-methyl-acetamid, N-2-Dimethylphosphinyl-äthyl-methyl-amin, Phospholenoxide oder Phospholanoxide, wie 1-Methylphospholen-1-oxid und 1-Äthyl-3-methylphospholen-1-oxid oder 1-Methylphospholan-1-oxid und 1-Äthyl-3-methyl-phospholan-1-oxid;
G. Amide der phosphinigen und phosphonigen Säure und der Phosphin- und Phosphonsäuren sowie ihrer Thioanaloga, wie Äthanphosphonsäure-bis-diäthylamid, Methan-butanphosphinigsäure-di-methylamid, Diäthylphosphinigsäureisobutylamid, ferner Triamide der Phosphor- und der Thiophosphorsäure wie Hexamethylphosphorsäuretriamid.

Es können auch Gemische derartiger Katalysatoren eingesetzt werden.

Die als Ausgangsstoffe benötigten Phosphorigsäure-2,4-di-tert.-butyl-phenyl-ester-dihalogenide (II) sind aus der Literatur bekannt und können in einfacher Weise nach dem in der deutschen Anmeldung P 39 28 291.0 beschriebenen Verfahren durch Umsatz von PX₃ (X = Cl, Br) mit 2,4-Di-tert.-butyl-phenol hergestellt werden. Die so erhaltenen Ausgangsstoffe können für das vorliegende Verfahren unmittelbar verwendet werden. Eine vorherige Destillation ist nicht erforderlich.

Das Reaktionsprodukt fällt gewöhnlich in gelber viskoser Form an. Es enthält als Hauptbestandteil Phosphorigsäure-bis-(2,4-di-tert.-butyl-phenyl)-ester-halogenid der Formel (I) wobei der Gehalt an (I) naturgemäß auch von dem gewählten Verhältnis der Reaktionspartner, der Reaktionstemperatur und der Reaktionsdauer abhängt. Zur Aufarbeitung kann man nicht umgesetztes Ausgangsmaterial (II) durch Destillation unter vermindertem Druck entfernen. Der Rückstand weist dann im allgemeinen einen Gehalt von 83 bis 97 % (gemäß ³¹P-NMR-Analyse) an (I) auf. Will man das Produkt (II) mit Grignard-Verbindungen umsetzen, wie es in den deutschen Patentanmeldungen P 38 43 016.9 und P 39 16 502.7 beschrieben ist, um Stabilisatoren für Polymere herzustellen, so ist eine weitere Reinigung nicht erforderlich. Falls gewünscht, lassen sich die Produkte (I) jedoch durch Destillation unter vermindertem Druck weiter reinigen.

Es ist besonders überraschend, daß nach dem erfindungsgemäßen Verfahren Phosphorigsäure-diarylester-monohalogenide in so hoher Ausbeute zugänglich sind, da aus der Literatur bekannt ist, daß sich bei solchen Verbindungen in dem angewandten Temperaturbereich durch Disproportionierungen ein Gleichgewicht einstellt, wobei sich komplexe Gemische verschiedener Produkte mit einem sehr hohen Anteil an Triarylphosphiten bilden (z. B. Zh. Obsch. Khim. Bd. 37, 464 - 468, 1967). Um solche Reaktionen zu unterdrücken, wird deshalb in der US-PS 4,739,000 zur Herstellung von (I) (mit X = Cl) auch ein bevorzugter Temperaturbereich von 5 bis 100°C angegeben. Im vorliegenden Fall war mit der Bildung eines besonders hohen Anteils von Tris-(2,4-di-tert.-butyl-phenyl)-phosphit auch deshalb zu rechnen, weil die verwendeten Katalysatoren bekanntlich die Bildung dieses hier unerwünschten Nebenproduktes katalysieren (siehe DE-OS 29 40 620).

In den folgenden Beispielen beziehen sich die Gehaltsangaben auf Prozent vom Gesamt-P gemäß ³¹P-NMR-Analyse.

### Beispiele:

1) Eine Mischung aus 768 g (2,5 Mol) Phosphorigsäure-2,4-di-tert.-butyl-phenyl-ester-dichlorid, 258 g (1,25 Mol) 2,4-Di-tert.-butyl-phenol und 0,2 g 4-Dimethylamino-pyridin (= 1,6 mmol) wurde unter Feuchtigkeitsausschluß und Stickstoffatmosphäre 5 Stunden auf ca. 180°C erhitzt, wobei anfangs eine starke Entwicklung von Chlorwasserstoff erfolgte. Anschließend ließ man auf 100°C abkühlen und destillierte nicht-umgesetztes Phosphorigsäure-ester-dichlorid und Leichtsieder unter vermindertem Druck ab, bis die Innentemperatur 200°C betrug. Dabei wurden ca. 200 g Destillat erhalten. Der klare, gelbe Destillationsrückstand hatte einen Gehalt von ca. 88 % Phosphorigsäure-bis-(2,4-di-tert.-butyl-phenyl)-ester-chlorid; δ CDCl₃ = 160,5 ppm.
2) Es wurde wie in Beispiel 1 gearbeitet, jedoch bei 140°C. Es wurden ca. 280 g nicht umgesetztes Ausgangsmaterial zurückgewonnen. Der Destillationsrückstand enthielt ca. 85 % Phosphorigsäure-bis-(2,4-di-tert.-butyl-phenyl)-ester-chlorid.
3) Wie im Beispiel 1 wurden 614,4 g (= 2 Mol) Phosphorigsäure-2,4-di-tert.-butyl-phenyl-ester-dichlorid und 206,3 g (= 1 Mol) 2,4-Di-tert.-butyl-phenol in Gegenwart von 1 g (0,012 Mol) Pyridin umgesetzt. Es wurden 240 g Ausgangsverbindung zurückgewonnen. Der Destillationsrückstand enthielt ca. 90 % Phosphorigsäure-bis-(2,4-di-tert.-butyl-phenyl)-ester-chlorid.
4) Die Mischung aus 921,6 g (3 Mol) Phosphorigsäure-2,4-di-tert.-butyl-phenyl-ester-dichlorid und 0,3 g (= 2,4 mmol) 4-Dimethylaminopyridin wurde unter Feuchtigkeitsausschluß und Durchleiten eines schwachen Stickstoffstromes 5 Stunden bei 190 - 200°C gerührt. Während dieser Zeit destillierten ca. 165 g Phosphortrichlorid ab. Anschließend ließ man auf ca. 100°C abkühlen und destillierte unter vermindertem Druck und erneutem Heizen, bis die Badtemperatur 200°C betrug, wobei etwa 190 g praktisch reines Phosphorigsäure-2,4-di-tert.-butyl-phenyl-ester-dichlorid überdestillierten.
   Der gelbe, viskose Destillationsrückstand wies einen Gehalt von ca. 97 % Phosphorigsäure-bis-(2,4-di-tert.-butyl-phenyl)-ester-chlorid auf; δ CDCl₃ = 160,5 ppm.
5) Die Mischung aus 92,2 g (= 0,3 Mol) Phosphorigsäure-2,4-di-tert.-butyl-phenyl-ester-dichlorid und 0,1 g (= 0,9 mmol) 4-Dimethylamino-pyridin wurde unter Durchleiten eines schwachen Stickstoffstromes 6 Stunden bei ca. 190°C gerührt. Dabei wurde gebildetes PCl₃ ausgetragen. Man ließ abkühlen, verzichtete auf die destillative Entfernung von restlichem Ausgangsmaterial und fertigte ein ³¹P-NMR Spektrum an. Das zurückbleibende Produkt enthielt ca. 70 % Phosphorigsäure-bis-(2,4-di-tert.-butyl-phenyl)-ester-chlorid.
6) Man arbeitete wie in Beispiel 4 mit der Abweichung, daß als Katalysator 0,1 g (0,5 mmol) Tri-n-butylphosphin verwendet wurden. Das zurückbleibende Produkt enthielt etwa 50 % Phosphorigsäure-bis-(2,4-di-tert.-butyl-phenyl)-ester-chlorid.

### Vergleichsversuch zu Beispielen 5 und 6

Bei einem unter den gleichen Bedingungen durchgeführten Versuch, jedoch ohne Katalysatorzusatz, betrug nach der gleichen Reaktionszeit der Gehalt an Phosphorigsäure-bis-(2,4-di-tert.-butyl-phenyl)-ester-chlorid nur ca. 4 %.

## Patentansprüche

1. Verfahren zur Gewinnung von Phosphorigsäure-bis-(2,4-di-tert.-butyl-phenyl)-ester-halogeniden der Formel 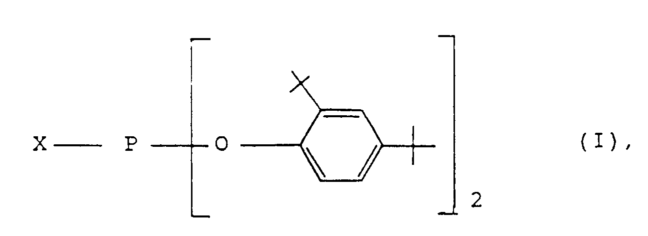 in der X ein Halogen mit einem Atomgewicht von mindestens 35 ist, dadurch gekennzeichnet, daß man ein Phosphorigsäure-2,4-di-tert.-butyl-phenyl-ester-dihalogenid der Formel (II) 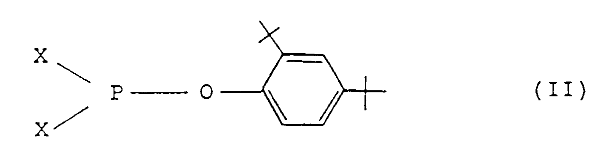 in Gegenwart eines Katalysators auf 130 bis 280°C erhitzt, das so durch Disproportionierung entstehende Phosphortrihalogenid aus dem Reaktionsgemisch entfernt und man als Katalysator mindestens einen Vertreter aus der Gruppe
a) Verbindungen der Formeln (III), (IV), (V) oder (VI) 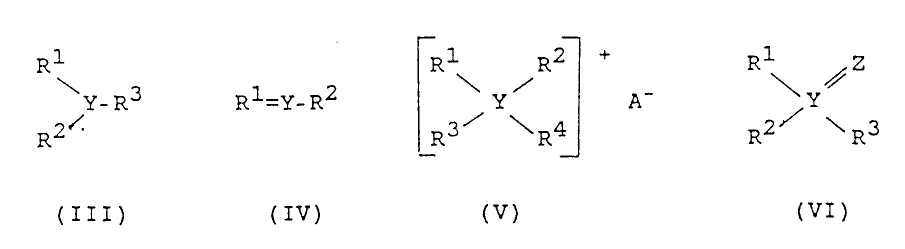 worin Y ein Element der fünften Hauptgruppe des periodischen Systems nach Meyer-Mendelejeff mit einer Ordnungszahl von 7 bis 15, A einen anorganischen oder organischen Säurerest, R¹, R², R³ und R⁴ gleiche oder verschiedene organische Reste mit bis zu 20 C-Atomen bedeuten, wobei zwei der Reste R¹ bis R⁴ oder im Falle der allgemeinen Formel (VI) zwei oder drei der Reste R¹ bis R³ sich zu einem cyclischen System schließen können, gegebenenfalls unter Einbeziehung eines Heteroatoms wie Sauerstoff, Stickstoff oder Schwefel, und Z Sauerstoff oder - falls Y Phosphor ist - auch Schwefel, zwei Halogenatome oder die Gruppe NR⁵ bedeutet, wobei R⁵ = R¹ oder Wasserstoff ist,
b) Säureamide und/oder
c) Verbindungen aus der Gruppe ein- bis dreibasige, organische oder anorganische vollamidierte Säuren des drei- oder fünfwertigen Phosphors, deren N-Atome durch aliphatische Reste mit bis zu 20 C-Atomen alkyliert sein und deren organische Reste bis zu 20 C-Atome enthalten können, einsetzt.

2. Verfahren nach Anspruch 1, dadurch gekennzeichnet, daß die Entfernung des Phosphortrihalogenids durch Durchleiten eines gegenüber den Reaktionsteilnehmern inerten Gases unterstützt wird.

3. Verfahren nach Anspruch 1 oder 2, dadurch gekennzeichnet, daß durch Zugabe einer geringeren als der stöchiometrischen Menge an 2,4-Di-tert.-butyl-phenol zusätzliches Phosphorigsäure-bis-(2,4-di-tert.-butyl-phenyl)-ester-halogenid (I) gebildet wird.

4. Verfahren nach Anspruch 3, dadurch gekennzeichnet, daß das 2,4-Di-tert.-butyl-phenol in einer Menge bis zu 0,9 Äquivalenten je Mol Phosphorigsäure-2,4-di-tert.-butyl-phenyl-ester-dihalogenid zugesetzt wird.

5. Verfahren nach Anspruch 4, dadurch gekennzeichnet, daß das 2,4-Di-tert.-butyl-phenol in einer Menge von 0,3 bis 0,6 Äquivalenten je Mol Phosphorigsäure-2,4-di-tert.-butyl-phenyl-ester-dihalogenid zugesetzt wird.

6. Verfahren nach einem oder mehreren der Ansprüche 1 bis 5, dadurch gekennzeichnet, daß ohne Zusatz eines Lösungsmittels gearbeitet wird.

7. Verfahren nach einem oder mehreren der Ansprüche 1 bis 6, dadurch gekennzeichnet, daß als Katalysator (III) ein tertiäres Amin verwendet wird.

8. Verfahren nach einem oder mehreren der Ansprüche 1 bis 7, dadurch gekennzeichnet, daß der Katalysator in einer Menge von 0,0001 bis 0,1, vorzugsweise 0,001 bis 0,02 Mol pro Mol des Phosphorigsäure-2,4-di-tert.-butyl-phenyl-ester-dihalogenids (II) zugegen ist.

9. Verfahren nach einem oder mehreren der Ansprüche 1 bis 8, dadurch gekennzeichnet, daß zur Isolierung des Produktes (I) restliches Ausgangsmaterial (II) anschließend destillativ entfernt wird.

10. Verfahren nach einem oder mehreren der Ansprüche 1 bis 9, dadurch gekennzeichnet, daß man bei einer Temperatur von 160 bis 230°C arbeitet.

## Claims

1. Process for obtaining bis(2,4-di-tert-butylphenyl) halophosphites of the formula 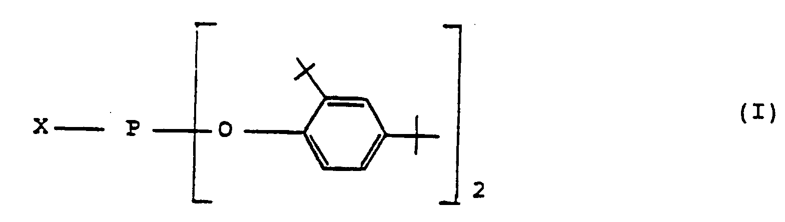 in which X is a halogen having an atomic weight of at least 35, characterized in that a 2,4-di-tert-butylphenyl dihalophosphite of the formula (II) 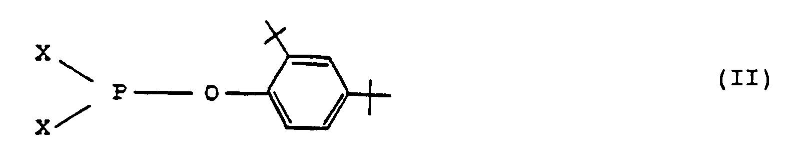 is heated to 130 to 280°C in the presence of a catalyst, the phosphorus trihalide formed in this way by disproportionation is removed from the reaction mixture and the catalyst employed is at least one representative from the group comprising
a) compounds of the formula (III), (IV), (V) or (VI) 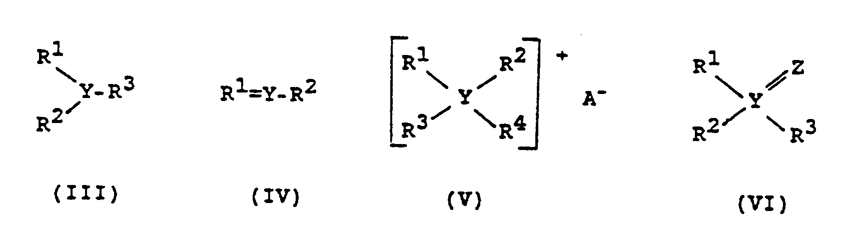 in which Y is an element of the fifth main group of the Periodic Table according to Meyer-Mendeleev having an atomic number of 7 to 15, A is an inorganic or organic acid radical, R¹, R², R³ and R⁴ are identical or different organic radicals having up to 20 carbon atoms, where two of the radicals R¹ to R⁴ or, in the case of the general formula (VI), two or three of the radicals R¹ to R³ can close to give a cyclic system, if appropriate with the inclusion of a heteroatom such as oxygen, nitrogen or sulfur, and Z is oxygen or - if Y is phosphorus - alternatively sulfur, two halogen atoms or the group NR⁵, where R⁵ is R¹ or hydrogen,
b) acid amides and/or
c) compounds from the group comprising mono- to tri- basic organic or inorganic fully amidated acids of tri- or pentavalent phosphorus, whose nitrogen atoms are alkylated by aliphatic radicals having up to 20 carbon atoms and whose organic radicals can contain up to 20 carbon atoms..

2. Process according to claim 1, characterized in that the removal of the phosphorus trihalide is assisted by passing through a gas which is inert to the reactants.

3. Process according to claim 1 or 2, characterized in that, by addition of a less than stoichiometric amount of 2,4-di-tert-butylphenol, additional bis(2,4-di-tert-butylphenyl) halophosphite (I) is formed.

4. Process according to claim 3, characterized in that the 2,4-di-tert-butylphenol is added in an amount of up to 0.9 equivalents per mole of 2,4-di-tert-butyl-phenyl dihalophosphite.

5. Process according to claim 4, characterized in that the 2,4-di-tert-butylphenol is added in an amount from 0.3 to 0.6 equivalents per mole of 2,4-di-tert-butylphenyl dihalophosphite.

6. Process according to one or more of claims 1 to 5, characterized in that the reaction is carried out without addition of a solvent.

7. Process according to one or more of claims 1 to 6, characterized in that a tertiary amine is used as the catalyst (III).

8. Process according to one or more of claims 1 to 7, characterized in that the catalyst is present in an amount from 0.0001 to 0.1, preferably 0.001 to 0.02 mol per mole of the 2,4-di-tert-butylphenyl dihalophosphite (II).

9. Process according to one or more of claims 1 to 8, characterized in that, to isolate the product (I), residual starting material (II) is subsequently removed by distillation.

10. Process according to one or more of claims 1 to 9, characterized in that the reaction is carried out at a temperature from 160 to 230°C.

## Revendications

1. Procédé de préparation d'halogénures de l'ester bis-(2,4-di-tert-butyl-phénylique) de l'acide phosphoreux répondant à la formule : 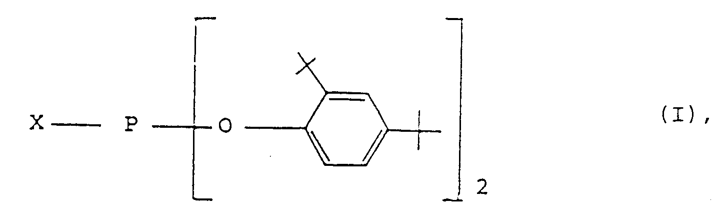 dans laquelle X est un atome d'halogène ayant un poids atomique d'au moins 35, caractérisé en ce qu'on chauffe à 130 à 280 °C un dihalogénure de l'ester 2,4-di-tert-butyl-phénylique de l'acide phosphoreux répondant à la formule (II) : 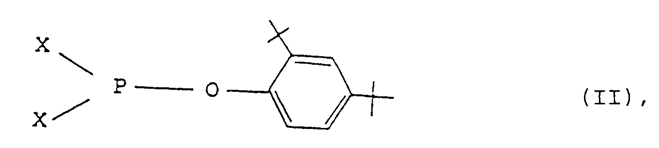 en présence d'un catalyseur, on élimine ainsi du mélange réactionnel le trihalogénure de phosphore formé par dismutation et on utilise comme catalyseur au moins un représentant du groupe
a) des composés répondant aux formules (III), (IV), (V) ou (VI) : 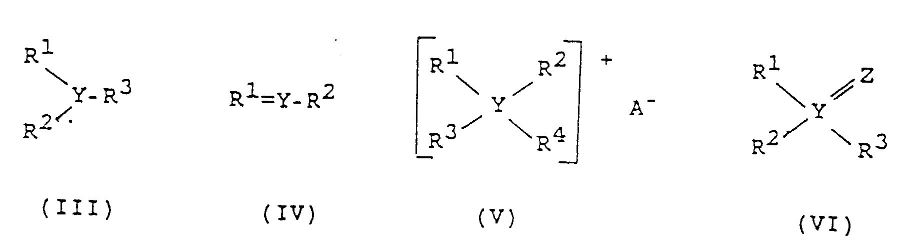 dans lesquelles Y est un élément du cinquième groupe principal du Système Périodique selon Meyer-Mendelejeff ayant un nombre atomique de 7 à 15, A est un radical d'acide minéral ou organique, R¹, R², R³ et R⁴ sont des radicaux organiques identiques ou différents ayant jusqu'à 20 atomes de C, deux des radicaux R¹ à R⁴ ou, dans le cas de la formule générale (VI), deux ou trois des radicaux R¹ à R³ pouvant se refermer pour donner un système cyclique, le cas échéant avec inclusion d'un hétéroatome tel que l'atome d'oxygène, l'atome d'azote ou l'atome de soufre, et Z est l'atome d'oxygène ou encore, si Y est l'atome de phosphore, l'atome de soufre, deux atomes d'halogène ou le groupe NR⁵, R⁵ étant identique à R¹ ou étant un atome d'hydrogène ;
b) des amides et/ou
c) des composés du groupe des mono- à triacides organiques ou minéraux complètement amidés du phosphore tri- ou pentavalent, dont les atomes de N peuvent être alkylés par des radicaux aliphatiques ayant jusqu'à 20 atomes de C, et dont les radicaux organiques peuvent contenir jusqu'à 20 atomes de C.

2. Procédé selon la revendication 1, caractérisé en ce que l'élimination du trihalogénure de phosphore est facilité par barbotage d'un gaz inerte vis-à-vis des composés participant à la réaction.

3. Procédé selon les revendications 1 ou 2, caractérisé en ce que par addition d'une quantité plus faible que la quantité stoechiométrique de 2,4-di-tert-butyl-phénol, il se forme un supplément d'halogénure de l'ester bis-(2,4-di-tert-butyl-phénylique) de l'acide phosphoreux (I).

4. Procédé selon la revendication 3, caractérisé en ce que le 2,4-di-tert-butyl-phénol est ajouté dans une quantité allant jusqu'à 0,9 équivalent par mole de dihalogénure de l'ester 2,4-di-tert-butyl-phénylique de l'acide phosphoreux.

5. Procédé selon la revendication 4, caractérisé en ce que le 2,4-di-tert-butyl-phénol est ajouté dans une quantité de 0,3 à 0,6 équivalent par mole de dihalogénure de l'ester 2,4-di-tert-butyl-phénylique de l'acide phosphoreux.

6. Procédé selon une ou plusieurs des revendications 1 à 5, caractérisé en ce qu'on opère sans addition de solvant.

7. Procédé selon une ou plusieurs des revendications 1 à 6, caractérisé en ce qu'on utilise comme catalyseur (III) une amine tertiaire.

8. Procédé selon une ou plusieurs des revendications 1 à 7, caractérisé en ce que le catalyseur est ajouté dans une quantité de 0,0001 à 0,1, de préférence de 0,001 à 0,02 mole par mole du dihalogénure de l'ester 2,4-di-tert-butyl-phénylique de l'acide phosphoreux.

9. Procédé selon une ou plusieurs des revendications 1 à 8, caractérisé en ce que pour l'isolement du produit (I), on élimine ensuite par distillation la matière de départ (II) résiduelle.

10. Procédé selon une ou plusieurs des revendications 1 à 9, caractérisé en ce que l'on opère à une température de 160 à 230 °C.
